# EUROPEAN PATENT SPECIFICATION

(11) **EP 2 031 200 B1**
(45) Date of publication and mention of the grant of the patent: **11.11.2009**
(21) Application number: 07017226.7
(22) Date of filing: 03.09.2007
(51) Int. Cl.: F01N 3/20, F01N 7/08

(54) **An exhaust gas purifying apparatus for a motorcycle, a motorcycle comprising an exhaust gas purifying apparatus**
Abgasreinigungsvorrichtung für ein Motorrad und mit einer solchen Abgasreinigungsvorrichtung ausgestattetes Motorrad
Appareil de purification de gaz d'échappement pour une motocyclette et une motocyclette d'un tel appareil de purification de gaz d'échappement

(43) Date of publication of application: 04.03.2009
(73) Proprietor: Yamaha Motor Research & Development Europe s.r.l., 20050 Gerno di Lesmo (MI) (IT)
(72) Inventor: Tisci, Sabino, 20010 Pogliano M.se (MI) (IT); Proserpio, Christiano, 20017 Rho (MI) (IT); Tisci, Riccardo, 20010 Pogliano M.se (MI) (IT)
(74) Representative: Grünecker, Kinkeldey, Stockmair & Schwanhäusser Anwaltssozietät

(56) References cited:
- EP-A- 1 749 988
- JP-A- 6 330 737
- US-A- 4 553 388

## Description

The present invention relates to an exhaust gas purifying apparatus for a motor vehicle and a respective motor vehicle comprising such an exhaust gas purifying apparatus.

It is well known in the automotive field that nowadays vehicles with combustion engines have to be equipped with catalysts, so as to comply with anti-pollution rules and/or requirements. This, in particular, applies to both usual motor vehicles, such as, for example, normal cars, and other motor vehicles, such as, for examples, motor bikes and/or three or four wheeled motor cycles, such as choppers, quads or the like. The function of the catalyst received inside the exhaust gas pipe (one or more depending on the exigencies and/or circumstances) is that of collecting and trapping the pollutant components of the exhaust gasses, thus allowing only permitted substances to be emitted and dispersed in the atmosphere. Accordingly, many efforts have been dedicated during the last years to the development of exhaust gas pipes offering improved and adequate performances. However, the development of exhaust gas pipes, in particular, for motor cycles, offering adequate performances and efficiency in terms of quantity of pollutants captured and trapped, but still complying with the other requirements relating to motor cycles, in particular, to motor bikes, such as, for instance, the overall layout, look and appearance, aerodynamics or the like, revealed to be a quite difficult and challenging task. In particular, this is due to fact that as anticipated above, an exhaust pipe with catalysts for a motor cycle has to comply with many requirements. One of them relates to the activation temperature of the catalyst, namely, the temperature range within which a adequate performance in terms of pollutants captured and/or trapped is possible. The activation temperature is not reached by the catalyst immediately after the start of the combustion engine but only after a certain time interval. This time interval depends in turn on the distance between the exhaust gas port of the combustion engine (to which the exhaust gas pipe is connected) and the catalyst. In this respect, it has to be noted that the activation temperature of common catalysts is usually comprised between approximately 550 and 650°. This activation temperature is reached due to the hot exhaust gases passing across the catalyst. However, the temperature of the exhaust gases decreases as a function of the time needed by said exhaust gases to reach the catalyst, or in other words, as a function of the distance between the exhaust gas port of the cylinder and the catalyst. Moreover, the temperature of the exhaust gases is at its highest value immediately after it passes through the exhaust gas port of the cylinder head, decreases along the exhaust gas pipe and reaches its lowest value at the output of the silencer of the exhaust pipe.

A further requirement to be taken into consideration relates to the positioning and disposition of the one or more catalyst within the exhaust gas pipe. To find a convenient location for the catalyst, revealed, in fact, to be a critical issue in terms of both the overall design of the motor cycles and the comfort of the driver and/or passenger. In more detail, this was due to the fact that common catalysts have a length usually comprised between about 10cm up to 25-35cm; this means that, in those cases in which at least two catalysts are used, at least two rectilinear portions of the exhaust gas pipe with the same length or more, each adapted to receive one of the two catalysts have to be provided. It appears therefore clearly that further problems arose due to the difficulty of finding the right location for these two rectilinear portions, without negatively affecting the overall design of the motor cycle. It has furthermore to be noted that, in the case of special motor cycles such as, for instance, off road motorcycles, a predefined minimal distance has to be left between the exhaust gas pipe and the ground otherwise the motorcycle cannot adequately exploit the purposes for which it is designed.

A further question was faced by the manufacturers of motor cycles during the last years, namely, how to purify the exhaust gasses inside the exhaust gas pipe Usually, in those arrangements comprising a first and a second catalyst, the first catalyst is a reduction catalyst. NOx in the exhaust gasses is reduced and exhaust gasses are purified in the first catalyst. The second catalyst is used as an oxidation catalyst, CO and HC in the exhaust gasses are oxidized and exhaust gasses are purified in the second catalyst .

It came out moreover, that not only the disposition and location of the one or more catalyst along the exhaust pipe influences the performances of the exhaust gas apparatus; on the contrary, it came out that even with one or more catalysts conveniently located along the exhaust gas pipe, in some cases, the performances of the overall exhaust gas apparatus revealed to be not satisfactory. For instance, if the diameter of the exhaust gas pipe was too small, no adequate reduction and/or oxidation of the exhaust gasses could be obtained. In an attempt to meet as many as possible of the criteria and/or requirements outlined above, several solutions relating in particular to exhaust gas pipes have been proposed in recent years by the manufacturers of motor cycles. For instance, solutions have been suggested according to which one or both of the two catalysts are placed immediately behind the combustion chamber of the engine; however, even if, on the one hand, with this solution it is possible to raise the activation temperature of the catalysts within a short time after starting the engine, on the other hand, the problem arises that the resistance of the exhaust gas flow is increased, thus resulting in the output characteristics of the engine to be negatively affected.

According to another solution known in the prior art, the exhaust pipe, once applied to the motorcycle, is allowed to pass along a side of the cylinder block and to extend toward the rear of the body of the motor cycle, with the two catalysts both being positioned on the side of said cylinder block. However, even if it can be appreciated that according to this solution, the two catalysts are not placed too far away from the combustion chamber, so that, on the one hand, the time for raising the activation temperature is not unduly augmented and/or increased, on the other hand, other disadvantages arise, relating in particular, to the design of the motor cycle. Further improvements of this solution have been proposed, according to which the catalysts are placed very close to the combustion chamber, so as to leave adequate clearance between the catalyst and the leg of the passenger and/or driver. However, when this solution is adopted, a further disadvantage arises, due to the fact that the temperature of the catalyst might arise excessively, in particular, beyond the allowed activation temperature.
Further examples of prior art gas purifying apparatuses can be found In each of documents EP 1 749 988, JP 06 330 737 A and US 4 553 388 A.
Therefore, it results from the above that, in spite of all the efforts made, the solutions proposed in the past as known in the prior art do not meet all the essential requirements which have to be taken into consideration during the design of the a motorcycle. In particular, the proposed solutions do not meet the need of an exhaust gas pipe offering good performances in terms of functionality and reliability of the catalysts, as well as in terms of the overall look of the motor cycle. In more detail, the proposed solutions do not meet the need of a sufficient quantity of pollutant substances captured and trapped by the two catalysts, and/or even not that of an adequate reduction and/or oxidation of the exhaust gasses taking place inside the exhaust gas pipe. Finally, the proposed solutions very often do not meet the requirement of an exhaust gas purifying apparatus matching with the overall design of the motor cycle to which they are mounted or applied, nor the need of a satisfactory aerodynamic of the motor cycle.

Accordingly, in view of the above, it is an object of the present invention to provide an exhaust gas purifying apparatus for a motor vehicle and a motor vehicle, in particular, a motorcycle, wherein adequate performances of the catalysts in terms of functionality and reliability are offered without negatively affecting other important criteria and/or requirements, such as, for instance, overall dimensions and/or external look as well as aerodynamic of the motor cycle.

A further object of the present invention is that of providing an exhaust gas purifying apparatus allowing adequate reduction and/or oxidation of the exhaust gasses inside the exhaust gas pipe, and still without negatively affecting other important criteria and/or requirements, such as, for instance, overall dimensions and/or external look as well as aerodynamic of the motor cycle

In general terms, the present invention is based on the consideration that the problems affecting the prior art exhaust gas pipes may be overcome by providing a exhaust gas pipe comprising different portions opportunely shaped and wherein the two catalysts are located adequately along the exhaust gas pipes. A further consideration on which the present invention is based relates to the fact that, if at least one of the two catalysts (or at least a part of it) is located in the front area of the engine, then the distance between the exhaust port of the cylinder and the inlet of at least one catalyst may be kept low enough to allow at least the activation temperature of said first catalyst to be reached quickly, whilst at the same time maintaining the clearance between both catalysts and the cylinder block large enough to avoid the situation that the temperature of same increases beyond the allowed activation temperature.

Still a further consideration on which the present invention is based relates to the fact that, if additional air is introduced into the exhaust gas pipe, then the chemical reaction (reduction and/or oxidation) of the exhaust gasses inside the exhaust gas pipe may be optimized. Still another consideration on which the present invention is based relates to the fact that, if the position along the exhaust gas pipe at which additional air is allowed to enter into the exhaust gas pipe is opportunely selected, then further advantages arise in terms of good or satisfactory combustion or chemical reaction of the exhaust gasses. Furthermore, adequately selecting the position at which the additional air is allowed to enter into the exhaust gas pipe further allows to better regulate the quantity of additional air entering into the exhaust gas pipe, with further advantages arising in terms of improved combustion or chemical reaction of the exhaust gasses. Finally, if adequate equipment, and/or devices are selected for the purpose of entering additional air into the exhaust gas pipe, with said equipment, or devices being located and/or positioned adequately, the above-mentioned advantages in terms of improved reaction of the exhaust gasses inside the exhaust gas pipe may be reached and/or obtained without negatively effecting the overall design and/or look of the motor cycle, in particular, without negatively effecting its dimensions and aerodynamic.

On the basis of the considerations as stated above, according to the present invention, the problems identified above affecting the prior art exhaust gas purifying apparatuses are overcome or at least, strongly reduced by the features defined in claims 1 and 15.

Preferred embodiments of the exhaust gas purifying apparatus according to the present invention are laid down in the dependent claims.

Further advantages, objects and features as well as embodiments of the present invention are defined in the appended claims and will become more apparent with the following detailed description when taken with reference to the accompanying drawings, in which identical or corresponding parts are identified by the same reference numerals. In particular, in the drawings:
Fig. 1 relates to a schematic side view of a motorcycle equipped with an exhaust gas purifying apparatus according to a first embodiment of the present invention;
Fig. 2 relates to a schematic enlarged view of a portion of a motorcycle equipped with an exhaust gas purifying apparatus according to said first embodiment of the present invention;
Fig. 3 relates to a schematic front view of a motorcycle equipped with an exhaust gas purifying apparatus according to the first embodiment of the present invention depicted in Figs. 1 and 2;
Fig. 4 relates to a schematic enlarged view of an exhaust gas purifying apparatus according to the first embodiment of the present invention depicted in Figs. 1 to 3;
Fig. 5 relates to a schematic side view of a motorcycle equipped with an exhaust gas purifying apparatus according to a further embodiment of the present invention;
Fig. 6 relates to a schematic side view of a portion of a motorcycle equipped with an exhaust gas purifying apparatus according to a still further embodiment of the present invention.

While the present invention is described with reference to the embodiments as illustrated in the following detailed description as well as in the drawings, it has to be appreciated that the following detailed description as well as the drawings are not intended to limit the scope of the present invention to the particular illustrative embodiments disclosed, but rather the described illustrative embodiments merely exemplify the various aspects of the present invention, the scope of which is defined by the appended claims.

The present invention is understood to be of particular advantage when applied to two-wheeled motorcycles, such as, for instance, motorbikes or the like. For this reason, examples will be given in the following, in which corresponding embodiments of the exhaust gas purifying apparatus according to the present invention are applied to motorcycles, in particular, to motorbikes. However, it has to be noted that the applications of the exhaust gas purifying apparatus according to the present invention are not limited to the case of motorcycles, in particular, to the case of motorbikes; on the contrary, the exhaust gas purifying apparatus according to the present invention may also be applied to other motorcycles, in particular, to three or even four-wheeled motor cycles such as, for instance, choppers, quads, or the like.

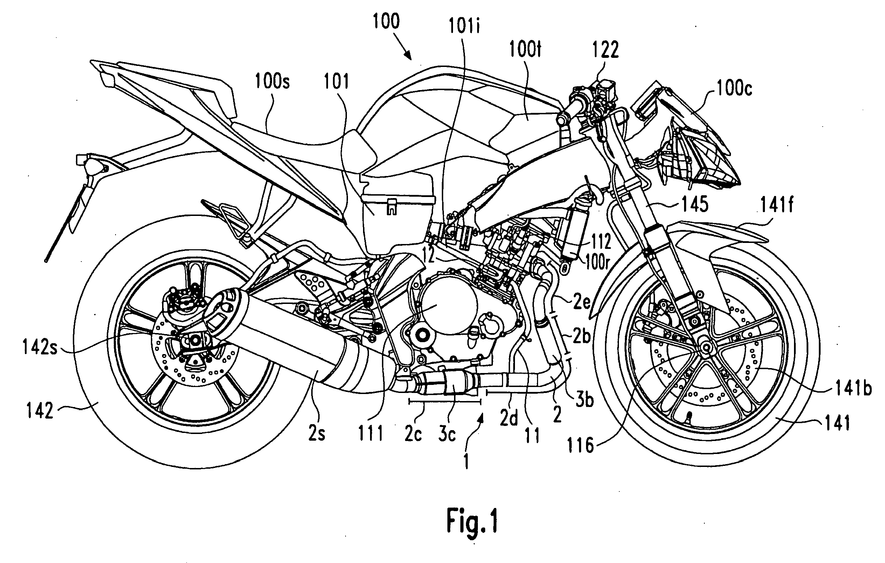

In the following, some details and features of the exhaust gas purifying apparatus according to a first embodiment of the present invention will be described with reference to Fig. 1.

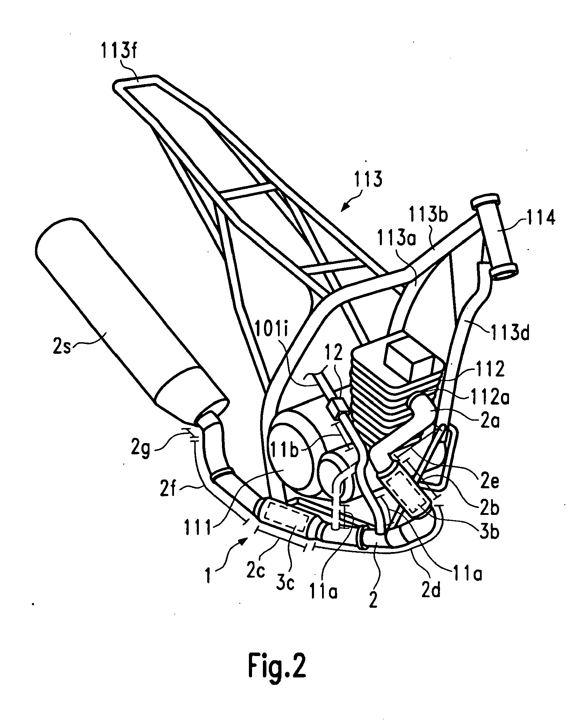

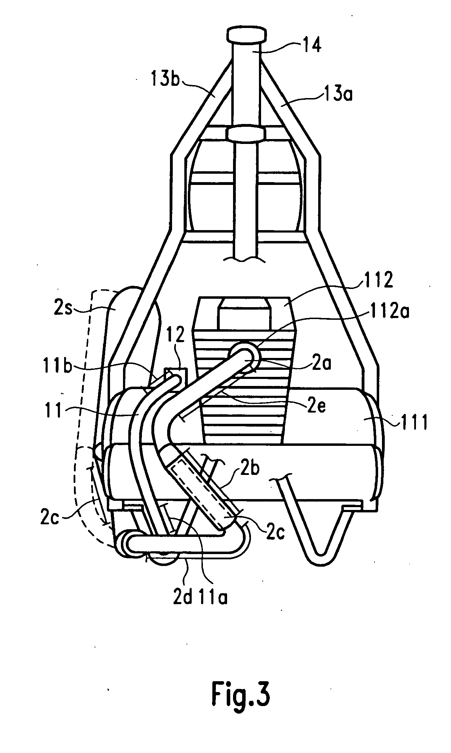

In Fig. 1, a motorcycle 100 is depicted. Although some portions and/or components or even accessories common to usual motor cycles have been omitted in Fig. 1 for the sake of clarity, the essential features of common motorcycles have been depicted in Fig. 1 and relate in particular, to a main frame (see also Figs. 2 and 3) supporting a main engine 111 comprising a cylinder 112 (in the following, also referred to as cylinder head or cylinder block 112). The motorcycle depicted in Fig. 1 further comprises a seat 100s and a fuel tank 100t. Moreover, a front cowling element 100c is provided, with said front cowling element 100c supporting components and/or accessories such as, for instance, headlights, front light indicators, rear mirrors, a speedometer or the like. A front wheel 141 is supported by a front fork 145 and comprises a front brake disc 141b; the front fork 145 is stably attached or fixed to the main frame 113 by means of a head pipe 114 (see also Figs. 2 and 3). The front wheel 141 is supported by the front fork 145 by means of a front axel 116.

In the same way, the motor cycles 100 depicted in Fig. 1 comprises a rear wheel 142 with a sprocket 142s, a chain (not depicted in Fig. 1) being further provided to transmit drive force to the rear wheel 142 through the rear sprocket 142s. Reference 122 in Fig. 1 identifies a handlebar provided with brake handles and corresponding cables extending therefrom. In more detail, reference 141f identifies a front fender provided to prevent the motor cycles 100 and/or the driver and/or passenger from being splashed with mud. As anticipated above, some usual components parts and/or features of common motorcycles have been either omitted in Fig. 1 or not identified by corresponding reference numerals for the sake of clarity; these features may relate for instance, to a rear cushion, rear direction indicators, a rear fender, a speed reducer, details of the engine 111 or the like. Even if not essential to the present invention, these omitted or non identified features and all their equivalents have to be considered as being comprised in the motorcycle depicted in Fig. 1.

Still with reference to Fig. 1, reference numeral 1 identifies an exhaust gas purifying apparatus according to a first embodiment of the present invention; as apparent from Fig. 1, said exhaust gas purifying apparatus 1 comprises a main pipe 2 extending from the cylinder 112 toward the rear of the motor cycles 100. Whilst, further details and/or features of the exhaust gas purifying apparatus according to the first embodiment of the present invention depicted in Fig. 1 will be described in the following with reference to Figs. 2 to 4, it can be appreciated at present, when looking at Fig. 1, that the exhaust gas purifying apparatus 1 depicted therein comprises two catalysts 3b and 3c received in two corresponding portions 2b and 2c, respectively, of the main pipe 2. Moreover, as apparent from Fig. 1, the portion 2b of the main pipe 2 receiving the catalysts 3b (the first catalyst along the main pipe 2 in the direction of the gas flow) is located in a front area of the engine 111, in particular, between the engine 111 and the front wheel 141. This particular location of the first catalyst 3b allows a portion of the main pipe 2 (in particular, the intermediate portion 2d of the main pipe 2) to be located on the side of the engine 111. This intermediate portion 2d has a diameter which is lower than that of the two portions 2b and 2c receiving the two catalysts 3b and 3c, respectively. Accordingly, the intermediate portion 2d (and eventually, the further portion of the main pipe 2 extending therefrom) may be located close enough to the engine 111 without unduly increasing the overall width of the motor cycles 100 (see also Fig. 3). Moreover, the distance along the main pipe 2 between the cylinder 112 (in particular, between its exhaust port 112a to be disclosed in the following) and at least the first catalyst 3b may be kept small enough so as to allow the activation temperature of at least said first catalyst 3b to be reached quickly. The main requirements disclosed in the introductory portion of the present application may therefore be met.

According to the embodiment of the exhaust gas purifying apparatus 1 depicted in Fig. 1, the second intermediate portion 2c of the main pipe 2 receiving the second catalyst 3c is located on the side of the engine 111 and close thereto; in particular, this solution allows to maintain an adequate distance and/or clearance between the main pipe 2 and the bottom. However, also other solutions are possible, according to which, for instance, the portion 2d of the main pipe 2 extending from the first intermediate portion 2b, eventually along with the second intermediate portion 2c receiving the second catalyst 3c, may be located so as to extend under the engine 111; when this solution is preferred, the overall width of the motor cycles is not unduly increased, with evident corresponding advantages in terms of the reduced overall dimensions of the motor cycle and in terms of its improved aerodynamics.

In Fig. 1, there is also depicted an air pipe 11 extending from a reed valve 12 to the main pipe 2, in particular, to the intermediate portion 2d thereof. Moreover, said reed valve 12 is connected to the induction system 101 (comprising an air filter) of the motor cycle 100 by means of an induction or connecting pipe 101i. Specifically, said connecting pipe 101i is connected downstream with respect to said air filter of said induction system 101. A pressure wave (minus pressure wave and plus pressure wave) is transmitted in the main pipe 2. Additional air may be therefore introduced in the main pipe 2 by a minus pressure wave which is transmitted in the main pipe 2.

In this way, additional air may be collected from the induction system 101 of the motor cycle 100 and introduced into the main pipe 2; to this end, the flow of air between the induction system 101 and the main pipe 2 is regulated by the reed valve 12. In more detail, said reed valve 12 is of the kind allowing air to flow only in a first predefined direction, in particular, into the main pipe 2, whilst air is not allowed to flow from the main pipe 2 through the air pipe 11 back to the induction system 101. The implementation of the air pipe 11, in combination with the reed valve 12, and the resulting possibility to introduce additional air into the main pipe 2 allows a better combustion and/or chemical reaction of the exhaust gasses inside the main pipe 2 to be obtained, with evident corresponding advantages in terms of a better performance of the overall exhaust gas purifying apparatus 1. Moreover, as will become more apparent with the following disclosure, locating the reed valve on the side of the cylinder 112 as depicted in Fig. 1 allows to obtain further advantages relating for instance, but not only, to the overall design of the motorcycle.

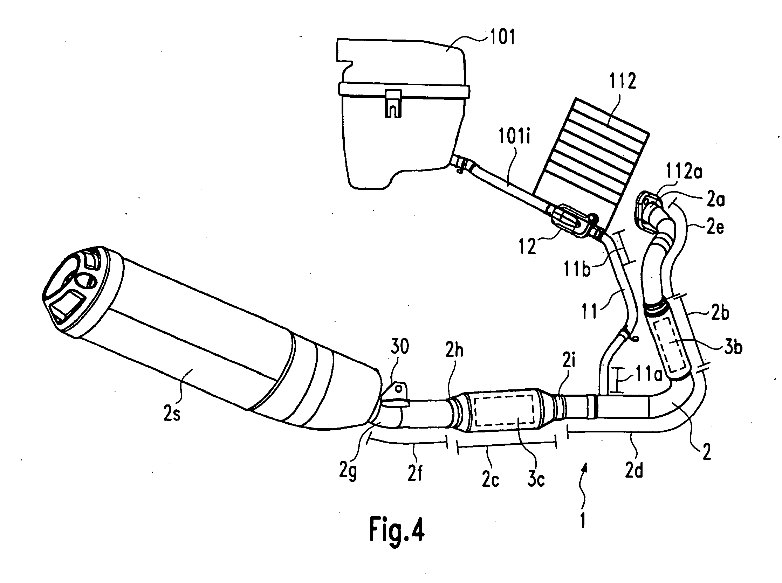

In the following, further details and/or features of the exhaust gas purifying apparatus according to the first embodiment of the present invention depicted in Fig. 1 will be disclosed with reference to Figs. 2 and 4; in Figs. 2 and 4, those features which have already been described above with reference to Fig. 1 are identified by the same reference numerals.

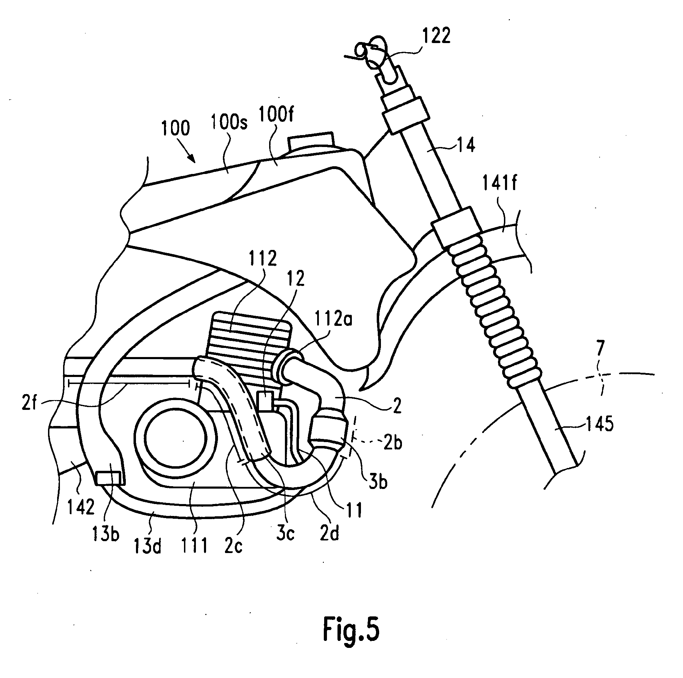

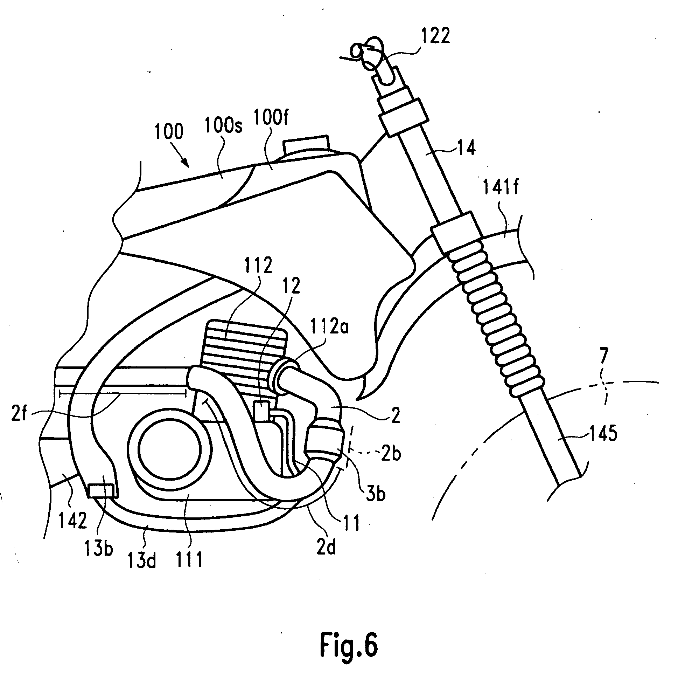

As apparent from Figs. 2 and 4, the exhaust gas purifying apparatus 1 according to the first embodiment of the present invention depicted therein comprises a first end portion 2a and a second end portion 2g, with the main pipe 2 extending between them. The first end portion 2a is adapted to be connected to the exhaust port 112a of the cylinder 112 (see in particular, Fig. 2) whilst a silencer 2s is connected to said second end portion 2g. Fixing means 30 (see Fig. 4) are provided for fixing the main pipe 2 to the main frame 113, thus offering improved stability of the overall exhaust gas purifying apparatus 1 and avoiding damages that may be caused by, for example, excessive vibrations during use of the apparatus 1 (for instance, during driving of the motorcycle 100). The first intermediate portion 2b (in which the first catalyst 3b is received) of the main pipe 2 is connected to the second intermediate portion 2c (in which a further catalyst 3c is received) through a third intermediate portion 2d; according to the embodiment depicted in Fig. 3, said third intermediate portion 2d extends substantially horizontally. However, according to the present invention other embodiments are possible (see in particular, Figs. 5 and 6) according to which the third intermediate portion 2d comprises a bent and/or curved portion, with said bent or curved portion being orientated according to the needs and/or circumstances. As apparent from Figs. 2 and 4, the main pipe 2 further comprises a fourth intermediate portion 2e disposed between the first end portion 2a and the first intermediate portion 2b. In particular, said fourth intermediate portion 2e comprises a portion (in the proximity of the end portion 2a) bent to the right and slightly downward (when seen from a driver or passenger sitting on the motor cycle 100), along with a substantially rectilinear portion extending slightly downward at a predefined angle, and a further portion (in the proximity of the first intermediate portion 2b) bent downward and slightly to the left. A further fifth intermediate portion 2f of the main pipe 2 extends from the second intermediate portion 2c towards the rear of the motor cycle. Moreover, as apparent from Figs. 2 and 4, said fifth intermediate portion 2f may comprise, according to the exigencies and/or circumstances, further sub-portions in order to be better or more conveniently located and disposed with respect to the motorcycle. This also applies to the intermediate portion 2d which may therefore also comprise two or more sub-portions; as apparent from Fig. 4, said sub-portions of one or both of the intermediate portions 2d and 2f may be connected by means or connecting elements or portions 2h and 2i. In particular, these connecting elements may comprise screwing connecting elements. However, according to the circumstances, other solutions may be adopted such as, for instance, welding the sub-portions to each other. It has furthermore to be noted that also the other intermediate portions of the main pipe 2 may be connected to each other according to any of the solutions well known to those skilled in the art and without departing from the scope of the present invention.

When looking at Fig. 2, it may be furthermore appreciated that the air pipe 11 comprises a first end portion 11 a and a second end portion 11 b, by means of which said air pipe 11 is connected to the main pipe 2 and the reed valve 12, respectively, so as to establish a fluid connection between the reed valve 12 and the main pipe 2. The position along the main pipe 2 at which the air pipe 11 is connected, by means of its end portion 11 a, to said main pipe 2 is located, as apparent from Figs. 2 and 4, downstream with respect to the first intermediate portion 2b, in the direction of the exhaust gas flow; the air pipe 11 is therefore connected to the main pipe 2 downstream with respect to the first catalyst 3b. The position at which the end portion11a of the air pipe 11 is connected to the main pipe 2 of the exhaust gas purifying apparatus may be selected according to the exigencies and and/or circumstances; for instance, as apparent from Fig. 2, the air pipe 11 (depicted in Fig. 2 in continuous lines) may extend from the reed valve 11 so as to be connected to the main pipe 2 at a position close to the first intermediate portion 2b. Alternatively, the air pipe 11 (depicted in Fig. 2 in dashed lines) may extend from the reed valve 12 so as to be connected through its end portion 11 a to the main pipe 2 at a position close to the second intermediate portion 2c. Still with reference to Fig. 2, it appears that, according to the embodiment of the present invention depicted therein, the reed valve 12 is located beside the cylinder 112, in particular, on the right side of said cylinder 112. In the same way, also the second end portion 11 b of the air pipe 11 extending from the reed valve 12 is located beside the cylinder 112, in particular, on the right side of said cylinder 112. This particular location of the reed valve 12 allows the following advantages to be obtained.

First of all, evident advantages in terms of the overall layout of the motor cycle are obtained, since the reed valve 12 and the second end portion 11 b of the air pipe 11 are located inside the space defined by the main frame 113 of the motor cycles, in particular inside the space defined by the head pipe 114 and the down tube 113d, along with the side tubes 113a and 113b extending downward from the head pipe 113 on opposite sides thereof. Accordingly, the motor cycle does not become unduly bulky or cumbersome, with evident advantages in terms of the overall appearance and aerodynamic of the motor cycle. Moreover, further advantages in terms of functionality of the exhaust gas purifying apparatus 1 are obtained. In fact, it has to be noted that the pressure of the air along the air pipe 11 decreases as a function of the distance from the reed valve 12; in more detail, the pressure of the air inside the air pipe 11 is at its highest value immediately after it exits the reed valve 12, decreases along the air pipe 11, and reaches its lowest value at the first end portion 11 a of the air pipe 11. Locating the reed valve 12 beside the cylinder 112 allows avoiding that the overall length of the air pipe 11 unduly increases; accordingly, it is also avoided that the pressure of the air unduly decreases from its highest value or, in other words, it is possible to maintain the pressure of air inside the air pipe 11 at an adequate value even at the end portion 11 a of the air pipe 11 or at the entrance of main pipe 2. Avoiding that the air pressure or the air flow unduly decreases allows to ensure that enough air enters the main pipe 2 so that adequate chemical reaction of the exhaust gasses inside the exhaust gas purifying apparatus is obtained. As stated above, a further important feature of the exhaust gas purifying apparatus according to the present invention depicted in Figs. 2 and 4 relates to the fact that, when the reed valve 12 is located beside the cylinder 112, also the second end portion 11 d of the air pipe 11 is at least partially located beside the cylinder 112. Moreover, the first end portion 11 a (opposite the said second end portion 11 b) of the air pipe 11 is located at least partially in the front area of the cylinder 112 and/or of the engine 111. Accordingly, the air pipe 11 may extend from the reed valve 12 to the main pipe 2 according to a quite regular path, i.e. without said air pipe 11 being unduly curved or bent. Further advantages in terms of avoided losses of air pressure along the air pipe 11 are therefore obtained.

With reference now to Fig. 4, further advantages offered by the exhaust gas purifying apparatus of the present invention may be appreciated. It appears in fact from Fig. 4 that locating the reed valve 12 beside the cylinder 112 also allows the connecting tube or pipe 101i extending from the induction system 101 to the reed valve 12 to be kept conveniently short. In fact, the induction system (see also Fig. 1) is usually located under the fuel tank 100t and behind the cylinder 112. Accordingly, a quite convenient and regular path for the connecting pipe 101i may be selected and the overall length of said connecting pipe 101i does not increase unduly. The delivering of air from the induction system 101 to the reed valve 12 is therefore improved and simplified.

Finally, it may be appreciated when looking at Figs. 2 and 4, that the assembly and maintenance operation of both the exhaust gas purifying apparatus according to the present invention and other component parts of the motor cycle are simplified and speeded up, with evident resulting advantages in terms of reduced costs. In fact, the access to the exhaust gas purifying apparatus or to parts of it (for instance, to the reed valve 12, the air pipe 11 or the connecting pipe 101 i) results to be simplified so that these component parts may be quickly and easily repaired or even substituted.

In the following, with reference to Fig. 3, further details and/or features of the exhaust gas purifying apparatus according to the embodiment of the present invention depicted therein will be described; as usual, features already described above with reference to previous Figs. are identified in Fig. 3 by the same reference numerals.

When looking at Fig. 3, the location of the first intermediate portion 2b of the main tube 2 receiving the first catalyst 2c, along with that of the reed valve 12 and the air pipe 11 extending therefrom with respect to the frame 13, the cylinder 112 and the engine 111 may be well appreciated. For instance, it appears clearly from Fig. 3 that the first intermediate portion 2b of the main pipe 2 is slightly inclined with respect to the vertical direction; in particular, the bottom of the first intermediate portion 2b is displaced with respect to its top inwardly or toward the left of the motor cycles, i.e. toward the right in Fig. 4. This slight inclination of the first intermediate portion 2b of the main tube 2 allows, in particular, to locate the first end portion 11 a of the air pipe 11 through which said air pipe 11 is connected to the main pipe 2 to be located (at least partially) in a front area of the engine 111 and/of the cylinder 112. This in turn allows, as stated above, to reduce the length of the air pipe 11. Moreover, the air pipe 11 may conveniently extend from the reed valve 12 to the main pipe 2 so that a convenient path for said air pipe 11 may be selected, without said air pipe 11 becoming unduly long or even bent or curved. Of course, the inclination of the first intermediate portion 2b may be selected according to the exigencies and circumstances; increasing the inclination of the intermediate portion 2b increases in turn the possibility to find a convenient location in the front area of the engine 111 or of the cylinder 112 for the end portion 11 a of the air pipe 11. Moreover, it appears from Fig. 3 that two convenient locations for the further intermediate portions of the main pipe 2 extending from the intermediate portion 2b (in particular, the intermediate portions 2c and 2f depicted for instance in Figs. 2 and 4) may be selected according to the exigencies and/or circumstances. According to a first location depicted in continuous lines in Fig. 3, said further intermediate portions may be located so as to extend under the engine 111; when this location is selected, said further intermediate portions are located substantially within the overall width of the engine 111 so that the overall transversal dimension of the motor cycle can be contained, thus improving the look, design and aerodynamic of the motor cycle. On the contrary, when the second solution depicted in dashed lines in Fig. 3 is selected, enough clearance may be left between the main pipe 2 and the bottom; this solution is for instance, preferred in the case of off-road motor cycles, which are therefore allowed to exploit the functions for which they are designed.

In the following, with reference to Fig. 5, a further embodiment of the exhaust gas purifying apparatus according to the present invention will be described; again, in Fig. 5, those features and/or details which have been described above with reference to previous Figs. are identified by the same reference numerals.

The main difference between the embodiment of the present invention depicted in Fig. 5 and the first embodiment of the present invention depicted in Figs. 1 to 4 relates to the location of the second intermediate portion 2c receiving the second catalyst 3c. In fact, as apparent from Fig. 5, said second intermediate portion 2c is located at least partially beside the engine 111 and/or the cylinder 112. To allow this location for the second intermediate portion 2c and the second catalyst 3c received therein a third intermediate portion 2d is used which, as apparent from Fig. 5, is curved or bent. In particular, it may be appreciated from Fig. 5, that said curved third intermediate portion 2d is bent to the right in proximity of the first intermediate portion 2b and downward, whilst said third intermediate portion is bent upward and to the left in proximity of the second intermediate portion 2c. In spite of this particular shape of the third intermediate portion 2d, the reed valve 12 and the air pipe 11 extending therefrom (in particular, its first end portion 11 a) may be located and arranged in a way similar to that according to which said reed valve 12 and said air pipe 11 are arranged and located in the embodiment of the present invention depicted in Figs. 1 to 4; accordingly, all the considerations as pointed out in the case of said first embodiment and relating to the advantages offered by said location of the reed valve 12 and the air pipe 11, also apply to the embodiment of the present invention depicted in Fig. 5. However, further advantages are offered by the embodiment of the exhaust gas purifying apparatus according to the embodiment of the present invention depicted in Fig. 5, in addition to those offered by those of the exhaust gas purifying apparatus according to the first embodiment of the present invention depicted in Figs. 1 to 4. These further advantages relate in particular to the fifth intermediate portion 2f of the main pipe 2 extending from the second intermediate portion 2c; in fact, said fifth intermediate portion 2f may be easily located inside the space defined by the main frame 13, in particular, behind the side tube 13b of said main frame 13. The overall lateral dimension of the motor cycle may be therefore drastically reduced. Moreover, the silencer 2s of the exhaust gas purifying apparatus 1 may be even located at least partially under the seat 100s of the motor cycle 100.

A further embodiment of the exhaust gas purifying apparatus according to the present invention will be described in the following with reference to Fig. 6 wherein, once again, those features depicted in Fig. 6 which have been already described above with reference to previous Figs. are identified by the same reference numerals.

As apparent from Fig. 6, the embodiment of the exhaust gas purifying apparatus 1 according to the present invention depicted therein comprises a unique catalyst 3b received in an intermediate portion 2b of the main pipe 2 located, at least partially, in a front area of the engine 111 and/or of the cylinder 112. The air pipe 11 extending from the reed valve 12 is still connected to the main pipe 2 at a position located downstream with respect to said first catalyst 3b in the direction of the exhaust gas flow; moreover, the reed valve 12 and at least a portion 11 b of the air pipe 11 extending therefrom are still located beside the cylinder 112. The layout or embodiment depicted in Fig. 6 may be preferred for those applications for which no extreme performances of the exhaust gas purifying apparatus in terms of pollutant substances captured or trapped are required, but rather more attention has to be paid to other requirements, such as, for instance, reduced dimension of the exhaust gas purifying apparatus and the motor cycle, as well as improved look, appearance and aerodynamic for the motor cycle. In fact, keeping in mind that all the advantages offered by the provision of the reed valve and the air pipe in the case of other embodiments of the present invention are also offered in the case of the embodiment of the present invention depicted in Fig. 6 (improved combustion of the exhaust gasses or the like) it may be appreciated when looking at Fig. 6, that the fifth intermediate portion 2f of the main pipe 2 may easily extend behind the side tube 13b of the main frame 13. Moreover, the overall dimension of the exhaust gas purifying apparatus and/or of the motor cycle may be further reduced due to the fact that a second intermediate portion 2c of said main tube 2 with a reduced and/or contained diameter may be implemented.

It arises therefore from the above disclosure that the exhaust gas purifying apparatus according to the present invention allows the drawbacks affecting the prior art exhaust gas purifying apparatuses to be overcome or at least strongly reduced or minimized. In particular, it has been demonstrated with the above disclosure that the exhaust gas purifying apparatus according to the present invention offers evident advantages in terms of functionality and design. It has been in fact demonstrated that the particular location of at least one of the two catalysts (in a front area of the engine and/or cylinder) received in the exhaust gas purifying apparatus according to the present invention allows the activation temperature of said at least one catalyst to be reached quickly after the start of the engine with evident advantages in terms of reduced pollution. Moreover, it has been demonstrated that locating the reed valve and/or at least a portion of the air pipe extending therefrom beside the cylinder offers evident advantages in terms of improved look, appearance, aerodynamic or the like of the motor cycle, as well as in terms of simplified, quick and therefore cheap assembly and/or maintenance operation. Moreover, further advantages in terms of improved combustion of the exhaust gasses are obtained, in particular, when the air pipe is connected to the exhaust gas purifying apparatus at a location along the main pipe thereof downstream with respect to said at least one catalyst.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

For instance, it will appear clear to those skilled in the art that different catalysts along those known in the art may be implemented and used in the exhaust gas purifying apparatus according to the various embodiments of the present invention. As an example, catalysts comprising a metal member with a predefined number of holes and a layer of catalyst material adhered to said metal member may be used in combination with the exhaust gas purifying apparatus according to the present invention. Accordingly, the kind of catalyst may be selected according to the circumstances and/or exigencies.

Moreover, although according to the embodiments of the exhaust gas purifying apparatus according to the present invention as described above and depicted in the drawings, the main pipe of said exhaust gas purifying apparatus extends toward the rear of the motor cycle and on the right side thereof, it will be immediately and unambiguously appreciated by those skilled in the art that even exhaust gas purifying apparatuses extending on the left side of the motor cycle fall within the scope of the present invention. As an example, an embodiment equivalent to that schematically depicted in Fig. 3 may be implemented, according to which the intermediate portion 2a of the main pipe 2 is curved first to the left and extends then downward, with the first intermediate portion 2b receiving the first catalyst 3b being slightly inclined with its bottom being displaced with respect to its top inwardly or toward the right of the motor cycle, i.e. toward the left in Fig. 3. In this case, as stated above, the further portions of the main tube may conveniently extend on the left side of the motor cycle.

## Claims

1. An exhaust gas purifying apparatus (1) for a motorcycle (100) comprising an engine (111) with a cylinder (112) and an exhaust port (112a) located at a front portion of said cylinder(112), said exhaust gas purifying apparatus (1) comprising a main pipe (2) with a first end portion (2a) adapted to be connected to said exhaust port (112a) and a first intermediate portion (2b) accommodating a first catalyst (3b); wherein, once said apparatus (1) is applied to said motorcycle (100) said first intermediate portion (2b) is at least partially disposed in a front area of said engine (111), and wherein said exhaust gas purifying apparatus further comprises an air supply pipe (11) adapted to supply air from an induction system (101) of said motorcycle into said main pipe (2); said air supply pipe (11) comprising a first end portion (11a) connected to said main pipe (2) at a position along said main pipe (2) disposed downstream with respect to said first intermediate portion (2b) in the direction of the exhaust gas flow; said exhaust gas purifying apparatus (1) further comprising a reed valve (12) adapted to regulate the air flow from said induction system (101) into said main pipe (2), said air supply pipe (11) comprising a second end portion (11b) extending from said reed valve (12) and connecting said reed valve (12) to said air supply pipe (11); said reed valve (12) and said second end portion (11b) of said air supply pipe (11) extending from said reed valve (12) being located beside said cylinder (112). Once said apparatus is applied to said motorcycle (100);
**characterized in that**
said main pipe (2) of said exhaust gas purifying apparatus further comprises a third intermediate portion (2d) extending down stream from said first intermediate portion (2b,) with a first section extending in a direction substantially transverse with respect to said motorcycle (100) and substantially horizontally once said apparatus is applied to said motorcycle (100); and **in that** said first end portion (11 a) of said air supply pipe (11) is connected to said main pipe (2) at a position along said first section of said third intermediate portion (2d) of said main pipe (2) located in a front area of the cylinder (112).

2. An exhaust gas purifying apparatus as claimed in claim 1,
**characterized in that**
said first intermediate portion (2b) of said main pipe (2) is disposed in a front area of said engine (111).

3. An exhaust gas purifying apparatus as claimed in one of claims 1 and 2;
**characterized in that**
said reed valve (12) and said second end portion (11b) of said air supply pipe (11) extending from said reed valve (12) are located at the right side of said cylinder (112).

4. An exhaust gas purifying apparatus as claimed in one of claims 1 and 2;
**characterized in that**
said reed valve (12) and said second end portion (11 b) of said air supply pipe (11) extending from said reed valve (12) are located at the left side of said cylinder (112).

5. An exhaust gas purifying apparatus as claimed in one of claims 1 to 4,
**characterized in that**
said main pipe (2) of said exhaust gas purifying apparatus (1) comprises a second intermediate portion (2c) accommodating a second catalyst (3c) and extending downstream from said third intermediate portion (2d).

6. An exhaust gas purifying apparatus as claimed in one of claims 1 to 5;
**characterized in that:**
said third intermediate portion (2d) of said main tube (2) comprising a second section extending at least partially beside said engine (111).

7. An exhaust gas purifying apparatus as claimed in one of claims 5 and 6;
**characterized in that**
said second intermediate (2c) portion of said main pipe (2) accommodating said second catalyst (3c) extends at least partially beside said engine (111).

8. An exhaust gas purifying apparatus as claimed in one of claims 1 to 7;
**characterized in that:**
said main pipe (2) further comprises a fourth intermediate portion (2e) disposed between said first end portion (2a) and said first intermediate portion (2b).

9. An exhaust gas purifying apparatus as claimed in claim 8;
**characterized in that**
once said apparatus (1) is applied to said motorcycle (100), with said first end portion (2a) of said main pipe (2) being connected to said exhaust port (112a), said fourth intermediate portion (2e) extends to the right of said motorcycle and downward from said first end portion (2a).

10. An exhaust gas purifying apparatus as claimed in claim 9;
**characterized in that:**
said first intermediate portion (2b) extends downwardly from said fourth intermediate portion (2e) and toward the middle of said motorcycle (100).

11. An exhaust gas purifying apparatus as claimed in one of claims 1 to 10;
**characterized in that**
said main pipe (2) further comprises a fifth intermediate portion (2f) extending toward the rear of said motorcycle.

12. An exhaust gas purifying apparatus as claimed in one of claims 1 to 11;
**characterized in that**
said main pipe (2) further comprises a second end portion (2g) opposed to said first end portion (2a) and a silencer (2s) connected to said second end portion (2g).

13. An exhaust gas purifying apparatus as claimed in one of claims 1 to 12,
**characterized in that**
at least one of said two catalysts (3b, 3c) is of the kind comprising a metal member with a predefined number of holes and a layer of catalyst material adhered to said metal member.

14. An exhaust gas purifying apparatus as claimed in claim 13,
**characterized in that**
said metal member has a substantially cylindrical shape.

15. A motorcycle (10), comprising an exhaust gas purifying apparatus (1) as defined in one of the previous claims 1 to 14.

16. A motorcycle as claimed in claim 15,
**characterized in that**
said cylinder (112) comprises a plurality of exhaust ports (112a), and **in that** side main pipe (2) of said apparatus (1) comprises a corresponding plurality of first end portions (2a), each connected to a corresponding exhaust port (112a).

17. A motorcycle as claimed one of claims 15 and 16,
**characterized in that**
said cylinder (112) comprises two exhaust ports (112a), and **in that** said main pipe (2) of said apparatus (1) comprises two first end portions (2a).

## Patentansprüche

1. Abgasreinigungsvorrichtung (1) für ein Motorrad (100), das einen Motor (111) mit einem Zylinder (112) und einer Auspufföffnung (112a) umfasst, die sich an einem vorderen Abschnitt des Zylinders (112) befindet, wobei die Abgasreinigungsvorrichtung (1) ein Hauptrohr (2) mit einem ersten Endabschnitt (2a), der so eingerichtet ist, dass er mit der Auspufföffnung (112a) verbunden wird, und einem ersten Zwischenabschnitt (2b) umfasst, der einen ersten Katalysator (3b) aufnimmt, wobei, wenn die Vorrichtung (1) an dem Motorrad (100) angebracht ist, der erste Zwischenabschnitt (2b) wenigstens teilweise in einem vorderen Bereich des Motors (111) angeordnet ist, und wobei die Abgasreinigungsvorrichtung des Weiteren ein Luftzuführrohr (11) umfasst, das so eingerichtet ist, dass es dem Hauptrohr (2) Luft von einem Ansaugsystem (101) des Motorrades zuführt, das Luftzuführrohr (11) einen ersten Endabschnitt (11a) umfasst, der mit dem Hauptrohr (2) an einer Position entlang des Hauptrohrs (2) verbunden ist, die in Bezug auf den ersten Zwischenabschnitt (2b) in der Richtung des Abgasstroms stromab angeordnet ist, die Abgasreinigungsvorrichtung (1) des Weiteren ein Membranventil (12) umfasst, das so eingerichtet ist, dass es den Luftstrom von dem Ansaugsystem (101) in das Hauptrohr (2) reguliert, das Luftzuführrohr (11) einen zweiten Endabschnitt (11 b) umfasst, der sich von dem Membranventil (12) aus erstreckt und das Membranventil (12) mit dem Luftzufuhrrohr (11) verbindet, und sich das Membranventil (12) und der zweite Endabschnitt (11b) des Luftzuführrohrs (11), der sich von dem Membranventil (12) aus erstreckt, neben dem Zylinder (112) befinden, wenn die Vorrichtung an dem Motorrad (100) angebracht ist;
**dadurch gekennzeichnet, dass**
das Hauptrohr (2) der Abgasreinigungsvorrichtung des Weiteren einen dritten Zwischenabschnitt (2d) umfasst, der sich von dem ersten Zwischenabschnitt (2b) stromab erstreckt, wobei ein erster Teil in einer Richtung im Wesentlichen quer in Bezug auf das Motorrad (100) und im Wesentlichen horizontal verläuft, wenn die Vorrichtung an dem Motorrad (100) angebracht ist, und dadurch, dass der erste Endabschnitt (11a) des Luftzuführrohrs (11) mit dem Hauptrohr (2) an einer Position entlang des ersten Teils des dritten Zwischenabschnitts (2b) des Hauptrohrs (2) verbunden ist, die sich in einem vorderen Bereich des Zylinders (112) befindet.

2. Abgasreinigungsvorrichtung nach Anspruch 1,
**dadurch gekennzeichnet, dass**
der erste Zwischenabschnitt (2b) des Hauptrohrs (2) in einem vorderen Bereich des Motors (111) angeordnet ist.

3. Abgasreinigungsvorrichtung nach einem der Ansprüche 1 und 2;
**dadurch gekennzeichnet, dass**
sich das Membranventil (12) und der zweite Endabschnitt (11 b) des Luftzuführrohrs (11), der sich von dem Membranventil (12) aus erstreckt, an der rechten Seite des Zylinders (112) befinden.

4. Abgasreinigungsvorrichtung nach einem der Ansprüche 1 und 2;
**dadurch gekennzeichnet, dass**
sich das Membranventil (12) und der zweite Endabschnitt (11 b) des Luftzuführrohrs (11), der sich von dem Membranventil (12) aus erstreckt, an der linken Seite des Zylinders (112) befinden.

5. Abgasreinigungsvorrichtung nach einem der Ansprüche 1 bis 4,
**dadurch gekennzeichnet, dass**
das Hauptrohr (2) der Abgasreinigungsvorrichtung (1) einen zweiten Zwischenabschnitt (2c) umfasst, der einen zweiten Katalysator (3c) aufnimmt und sich von dem dritten Zwischenabschnitt (2d) aus stromab erstreckt.

6. Abgasreinigungsvorrichtung nach einem der Ansprüche 1 bis 5;
**dadurch gekennzeichnet, dass:**
der dritte Zwischenabschnitt (2d) des Hauptrohrs (2) einen zweiten Abschnitt umfasst, der sich wenigstens teilweise neben dem Motor (111) erstreckt.

7. Abgasreinigungsvorrichtung nach einem der Ansprüche 5 und 6;
**dadurch gekennzeichnet, dass**
sich der zweite Zwischenabschnitt (2c) des Hauptrohrs (2), der den zweiten Katalysator (3c) aufnimmt, wenigstens teilweise neben dem Motor (111) erstreckt.

8. Abgasreinigungsvorrichtung nach einem der Ansprüche 1 bis 7;
**dadurch gekennzeichnet, dass**
das Hauptrohr (2) des Weiteren einen vierten Zwischenabschnitt (2e) umfasst, der zwischen dem ersten Endabschnitt (2a) und dem ersten Zwischenabschnitt (2b) angeordnet ist.

9. Abgasreinigungsvorrichtung nach Anspruch 8;
**dadurch gekennzeichnet, dass**
wenn die Vorrichtung (1) an dem Motorrad (100) angebracht ist und der erste Endabschnitt (2a) des Hauptrohrs (2) mit der Auspufföffnung (112a) verbunden ist, sich der vierte Zwischenabschnitt (2e) rechts von dem Motorrad und von dem ersten Endabschnitt (2a) nach unten erstreckt.

10. Abgasreinigungsvorrichtung nach Anspruch 9;
**dadurch gekennzeichnet, dass:**
sich der erste Zwischenabschnitt (2b) von dem vierten Zwischenabschnitt (2e) nach unten und zur Mitte des Motorrads (100) hin erstreckt.

11. Abgasreinigungsvorrichtung nach einem der Ansprüche 1 bis 10;
**dadurch gekennzeichnet, dass**
das Hauptrohr (2) des Weiteren einen fünften Zwischenabschnitt (2f) umfasst, der sich zur Rückseite des Motorrades hin erstreckt.

12. Abgasreinigungsvorrichtung nach einem der Ansprüche 1 bis 11;
**dadurch gekennzeichnet, dass**
das Hauptrohr (2) des Weiteren einen zweiten Endabschnitt (2g), der dem ersten Endabschnitt (2a) gegenüberliegt, und einen Schalldämpfer (2s) umfasst, der mit dem zweiten Endabschnitt (2g) verbunden ist.

13. Abgasreinigungsvorrichtung nach einem der Ansprüche 1 bis 12,
**dadurch gekennzeichnet, dass**
wenigstens einer der zwei Katalysatoren (3b, 3c) von dem Typ ist, der ein Metallelement mit einer vordefinierten Anzahl von Löchern und eine an dem Metallelement haftende Schicht aus Katalysatormaterial umfasst.

14. Abgasreinigungsvorrichtung nach Anspruch 13,
**dadurch gekennzeichnet, dass**
das Metallelement eine im Wesentlichen zylindrische Form hat.

15. Motorrad (10), das eine Abgasreinigungsvorrichtung (1) nach einem der vorangehenden Ansprüche 1 bis 14 umfasst.

16. Motorrad nach Anspruch 15,
**dadurch gekennzeichnet, dass**
der Zylinder (112) eine Vielzahl von Auspufföffnungen (112a) umfasst, und dadurch, dass das Hauptrohr (2) der Vorrichtung (1) eine entsprechende Vielzahl erster Endabschnitte (2a) umfasst, die jeweils mit einer entsprechenden Auspufföffnung (112a) verbunden sind.

17. Motorrad nach einem der Ansprüche 15 und 16,
**dadurch gekennzeichnet, dass**
der Zylinder (112) zwei Auspufföffnungen (112a) umfasst, und dadurch, dass das Hauptrohr (2) der Vorrichtung (1) zwei erste Endabschnitte (2a) umfasst.

## Revendications

1. Appareil de purification des gaz d'échappement (1) pour une motocyclette (100) comprenant un moteur (111) avec un cylindre (112) et un orifice d'échappement (112a) situé au niveau d'une partie avant dudit cylindre (112), ledit appareil de purification des gaz d'échappement (1) comprenant un tuyau principal (2) avec une première partie d'extrémité (2a) adaptée pour être raccordée audit orifice d'échappement (112a) et une première partie intermédiaire (2b) logeant un premier catalyseur (3b) ; dans lequel une fois ledit appareil (1) appliqué sur ladite motocyclette (100), ladite première partie intermédiaire (2b) est au moins partiellement disposée dans une zone avant dudit moteur (111), et dans lequel ledit appareil de purification des gaz d'échappement comprend en outre un tuyau d'alimentation d'air (11) adapté pour alimenter l'air provenant d'un système d'induction (101) de ladite motocyclette dans ledit tuyau principal (2) ; ledit tuyau d'alimentation d'air (11) comprenant une première partie d'extrémité (11a) raccordée audit tuyau principal (2) dans une position située le long dudit tuyau principal (2) disposé en aval par rapport à ladite première partie intermédiaire (2b) dans la direction d'écoulement des gaz d'échappement ; ledit appareil de purification des gaz d'échappement (1) comprenant en outre une soupape à clapet (12) adaptée pour réguler l'écoulement d'air provenant dudit système d'induction (101) dans ledit tuyau principal (2), ledit tuyau d'alimentation d'air (11) comprenant une seconde partie d'extrémité (11b) s'étendant à partir de ladite soupape à clapet (12) et raccordant ladite soupape à clapet (12) audit tuyau d'alimentation d'air (11) ; ladite soupape à clapet (12) et ladite seconde partie d'extrémité (11b) dudit tuyau d'alimentation d'air (11) s'étendant à partir de ladite soupape à clapet (12) étant situées à côté dudit cylindre (112) une fois que ledit appareil est appliqué sur ladite motocyclette (100),
**caractérisé en ce que :**
ledit tuyau principal (2) dudit appareil de purification des gaz d'échappement comprend en outre une troisième partie intermédiaire (2d) s'étendant en aval de ladite première partie intermédiaire (2b), avec une première section qui s'étend dans une direction sensiblement transversale par rapport à ladite motocyclette (100) et sensiblement horizontalement une fois que ledit appareil est appliqué à ladite motocyclette (100) ; et **en ce que** ladite première partie d'extrémité (11a) dudit tuyau d'alimentation d'air (11) est raccordée audit tuyau principal (2) dans une position située le long de ladite première section de ladite troisième partie intermédiaire (2d) dudit tuyau principal (2) situé dans une zone avant du cylindre (112).

2. Appareil de purification des gaz d'échappement selon la revendication 1, **caractérisé en ce que** ladite première partie intermédiaire (2b) dudit tuyau principal (2) est disposée dans une zone avant dudit moteur (111).

3. Appareil de purification des gaz d'échappement selon l'une quelconque des revendications 1 et 2, **caractérisé en ce que** ladite soupape à clapet (12) et ladite seconde partie d'extrémité (11b) dudit tuyau d'alimentation d'air (11) s'étendant à partir de ladite soupape à clapet (12) sont situées du côté droit dudit cylindre (112).

4. Appareil de purification des gaz d'échappement selon l'une quelconque des revendications 1 et 2, **caractérisé en ce que** ladite soupape à clapet (12) et ladite seconde partie d'extrémité (11b) dudit tuyau d'alimentation d'air (11) s'étendant à partir de ladite soupape à clapet (12) sont situées du côté gauche dudit cylindre (112).

5. Appareil de purification des gaz d'échappement selon l'une quelconque des revendications 1 à 4, **caractérisé en ce que** ledit tuyau principal (2) dudit appareil de purification des gaz d'échappement (1) comprend une seconde partie intermédiaire (2c) logeant un second catalyseur (3c) et s'étendant en aval de ladite troisième partie intermédiaire (2d).

6. Appareil de purification des gaz d'échappement selon l'une quelconque des revendications 1 à 5, **caractérisé en ce que** ladite troisième partie intermédiaire (2d) dudit tube principal (2) comprend une seconde section s'étendant au moins partiellement à côté dudit moteur (111).

7. Appareil de purification des gaz d'échappement selon l'une quelconque des revendications 5 et 6, **caractérisé en ce que** ladite deuxième partie intermédiaire (2c) dudit tuyau principal (2) logeant ledit second catalyseur (3c) s'étend au moins partiellement à côté dudit moteur (111).

8. Appareil de purification des gaz d'échappement selon l'une quelconque des revendications 1 à 7, **caractérisé en ce que** ledit tuyau principal (2) comprend en outre une quatrième partie intermédiaire (2e) disposée entre ladite première partie d'extrémité (2a) et ladite première partie intermédiaire (2b).

9. Appareil de purification des gaz d'échappement selon la revendication 8, **caractérisé en ce qu'**une fois que ledit appareil (1) est appliqué à ladite motocyclette (100), avec ladite première partie d'extrémité (2a) dudit tuyau principal (2) qui est raccordée audit orifice d'échappement (112a), ladite quatrième partie intermédiaire (2e) s'étend vers la droite de ladite motocyclette et vers le bas à partir de ladite première partie d'extrémité (2a).

10. Appareil de purification des gaz d'échappement selon la revendication 9, **caractérisé en ce que** ladite première partie intermédiaire (2b) s'étend vers le bas à partir de ladite quatrième partie intermédiaire (2e) et vers le milieu de ladite motocyclette (100).

11. Appareil de purification des gaz d'échappement selon l'une quelconque des revendications 1 à 10, **caractérisé en ce que** ledit tuyau principal (2) comprend en outre une cinquième partie intermédiaire (2f) qui s'étend vers l'arrière de ladite motocyclette.

12. Appareil de purification des gaz d'échappement selon l'une quelconque des revendications 1 à 11, **caractérisé en ce que** ledit tuyau principal (2) comprend en outre une seconde partie d'extrémité (2g) opposée à ladite première partie d'extrémité (2a) et un silencieux (2s) raccordé à ladite seconde partie d'extrémité (2g).

13. Appareil de purification des gaz d'échappement selon l'une quelconque des revendications 1 à 12, **caractérisé en ce qu'**au moins l'un desdits deux catalyseurs (3b, 3c) est du type comprenant un élément métallique avec un nombre prédéfini de trous et une couche de matériau catalyseur fixée sur ledit élément métallique.

14. Appareil de purification des gaz d'échappement selon la revendication 13, **caractérisé en ce que** ledit élément métallique a une forme sensiblement cylindrique.

15. Motocyclette (10) comprenant un appareil de purification des gaz d'échappement (1) selon l'une quelconque des revendications 1 à 14 précédentes.

16. Motocyclette selon la revendication 15, **caractérisée en ce que** ledit cylindre (112) comprend une pluralité d'orifices d'échappement (112a) et **en ce que** le tuyau principal latéral (2) dudit appareil (1) comprend une pluralité correspondante de premières parties d'extrémité (2a), chacune raccordée à un orifice d'échappement (112a) correspondant.

17. Motocyclette selon l'une quelconque des revendications 15 et 16, **caractérisée en ce que** ledit cylindre (112) comprend deux orifices d'échappement (112a) et **en ce que** ledit tuyau principal (2) dudit appareil (1) comprend deux premières parties d'extrémité (2a).
